(19) Europäisches Patentamt / European Patent Office / Office européen des brevets

(11) **EP 2 227 050 A2**

(12) # EUROPEAN PATENT APPLICATION

(43) Date of publication:
**08.09.2010 Bulletin 2010/36**

(51) Int Cl.:
***H04W 24/02*** *(2009.01)*

(21) Application number: **09014888.3**

(22) Date of filing: **01.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **06.03.2009 JP 2009052811**

(71) Applicant: **Hitachi Ltd.**
**Chiyoda-ku**
**Tokyo 100-8280 (JP)**

(72) Inventors:
• **Takayanagi, Daigo**
  **Tokyo 100-8220 (JP)**
• **Usuba, Keiji**
  **Tokyo 100-8220 (JP)**

(74) Representative: **Strehl Schübel-Hopf & Partner**
**Maximilianstrasse 54**
**80538 München (DE)**

(54) **Adjoining base station determining method and management device**

(57)     A novel method for automatically determining adjoining base stations and storing the information on the adjoining base stations in these base stations is provided which, when a new base station is deployed, immediately sets the adjoining base station information and does not consume wireless resources. This method introduces a management device (102) which, in automatically determining adjoining base stations, executes a decision logic (803) that determines two base stations to be adjoining each other when the distance between the two base stations is smaller than the sum of the radii of coverage of the two base stations.

## FIG.1

EP 2 227 050 A2

**Description**

BACKGROUND OF THE INVENTION

The present invention relates to a technology to automatically determine an adjoining base station in a wireless communication system.

Among wireless communication systems of recent years a cellular method has prevailed widely.

In the cellular method, an area in which one base station can send and receive radio signals to and from mobile stations is called a cell. A plurality of base stations are deployed in a way that connects the cells, forming a service area of the entire system. A mobile station communicates through a base station in which it is situated. With the base stations so arranged that ends of adjoining cells overlap each other, when the mobile station moves from one cell to another, the base station communicating with the mobile station is quickly switched over from the original base station to a destination base station, thus allowing the mobile station to roam among the cells while maintaining the communication. This technology is called a soft handover and widely used. To effect a swift soft handover, the base station normally needs to store beforehand information of adjoining base stations, such as an identifier and an IP address.

A telecommunications carrier, when newly setting a base station, performs a cell design computer simulation or takes on-site measurements of strengths of radio signals coming from neighboring base stations to determine the adjoining base stations and then set these information in the new base station. To reduce the operations performed by the telecommunications carrier of determining and setting the adjoining base stations, there has been a call in recent years for automating these operations.

As for those base stations deployed by the user, like femtocell base stations scheduled to be introduced soon, telecommunications carriers in the first place cannot set adjoining base stations. Also from a viewpoint of avoiding requiring the user to perform a troublesome setting operation in introducing such base stations, there is expected to be a necessity for the function that enables a base station to automatically determine and set adjoining base stations.

Technologies that have been devised to automatically set adjoining base stations include those proposed in the following patent documents.

Patent document 1 concerns a technique in which a base station, when communicating with a mobile station, notifies an identifier of the mobile station and an identifier of the base station itself to a control unit of the base station. The control unit of the base station determines as adjoining each other a plurality of base stations that have communicated, within a given period of time, with the same mobile station more than a predetermined number of times and informs its decision to each of the base stations.

Patent document 2 describes a technique in which a base station or a mobile station measures a field strength of a downlink signal and, if there is the downlink signal, makes an analysis to see if it is used in a common mobile communication system and in which, if the downlink signal is found to be used in the common mobile communication system, the base station transmitting that signal is included as an adjoining base station.

[Prior Art Documents]

[Patent Documents]

   Patent document 1: JP-A-2006-217051
   Patent document 2: JP-A-8-237728

SUMMARY OF THE INVENTION

The present invention aims to establish a method that automatically determines adjoining base stations and sets this information in these base stations.

The methods of the above patent documents have the following problems.

In patent document 1, a base station and another base station do not recognize each other as adjoining base stations until a condition is met that the same mobile station communicates with each of these two base stations more than a predetermined number of times within a given period of time. So, until the condition is established, the mobile station moving between the two base stations cannot perform the soft handover.

In patent document 2, when a base station measures and analyzes a downlink radio signal of another base station, a downlink signal demodulation function, which is essentially the function of the mobile station, needs to be installed in the base station. If this function is able to be installed, there is a possibility that although the radio signal can be detected at the boundary of cells, it may not be able to be detected at a more distant position of the base station. In the case where the mobile station measures and analyzes the downlink signal, the mobile station needs to report to the base station each time the mobile station receives a new downlink signal, or periodically. This consumes the wireless resources.

To deal with these problems, the present invention proposes a novel method which automatically determines adjoining base stations and stores this information in the base station, making it possible to instantly set adjoining base station information when deploying a base station without consuming wireless resources.

A decision logic to automatically determine adjoining base stations is introduced that takes two base stations as adjoining each other if a distance between the two base stations is smaller than a sum of radii of coverage of these base stations.

A management device that executes the above decision logic to automatically determine adjoining base stations is introduced.

The management device collects from base stations their identifiers, position information, radio signal transmission power and other information, calculates a coverage radius from each radio signal transmission power, calculates a distance between the base stations from the position information and, based on the decision logic, automatically determines adjoining base stations. Further, the management device sends information such as IP addresses of the adjoining base stations to the base stations, automating the setting of the adjoining base station information.

With this invention, when a base station is deployed, the determination of those base stations adjoining that base station and the setting of the adjoining base station information are automatically executed, alleviating the work that needs to be done by a communication carrier or user when deploying the base station.

Further, with this invention, when a new base station is deployed, the information on the new base station is automatically added to adjoining base station information in the neighboring base stations that have been determined as the adjoining base stations for the new base station. So, there is no need for the communication carrier or user to update the adjoining base station information in the existing base stations in response to the deployment of the new base station.

Furthermore, with this invention, since, when a new base station is deployed, the generation of the adjoining base station information for the deployed base station and the updating of the adjoining base station information in the neighboring base stations that have been determined as the adjoining base station for the deployed base station are executed instantly, the soft handover from the newly deployed base station to the adjoining base stations and the soft handover from the adjoining base stations to the newly deployed base station can be done immediately after the service of the new base station has begun.

Further, with this invention, the wireless resource is not consumed by the implementation of the invention.

Other objects, features and advantages of the invention will become apparent from the following description of the embodiments of the invention taken in conjunction with the accompanying drawings.

BRIEF DESCRIPTION OF THE DRAWINGS

Fig. 1 shows a configuration of the wireless communication system applying the present invention.

Fig. 2 shows a configuration of a management device 102.

Figs. 3A and 3B show changes in contents of a base station information table 301.

Fig. 4 shows a relation on a map among base stations 101-i (i = 1-3) in terms of their position and the radius of coverage.

Fig. 5 shows a configuration of the base station 101 in embodiment 1.

Figs. 6A and 6B show changes in contents of a local base station information table of a base station 101-4 in embodiment 1.

Figs. 7A-7G show changes in contents of a local base station information table 701 of a base station 101-i (i = 1-4).

Fig. 8 is a sequence diagram to implement an automated decision of adjoining base stations and an automated setting of the adjoining base station information in embodiment 1, 2, 3.

Fig. 9 shows a relation on a map among base stations 101-i (i = 1-4) in terms of their position and the radius of coverage.

Fig. 10 shows a configuration of the base station 101 in embodiment 2, 3 when the base station mounts a user interface and a user interface control unit 1001.

Figs. 11A and 11B show changes in contents of a local base station information table of a base station 101-4 in embodiment 2, 3.

Fig. 12 shows a configuration of the base station 101 when it mounts a processing unit 1201 in embodiment 4.

Figs. 13A and 13B show changes in contents of the local base station information table of the base station 101-4 in embodiment 4.

Fig. 14 is a sequence diagram to implement an automated decision of adjoining base stations and an automated setting of the adjoining base station information in embodiment 4.

DETAILED DESCRIPTION OF THE EMBODIMENTS

Now, embodiments of this invention will be described in detail by referring to the accompanying drawings.

[Embodiment 1]

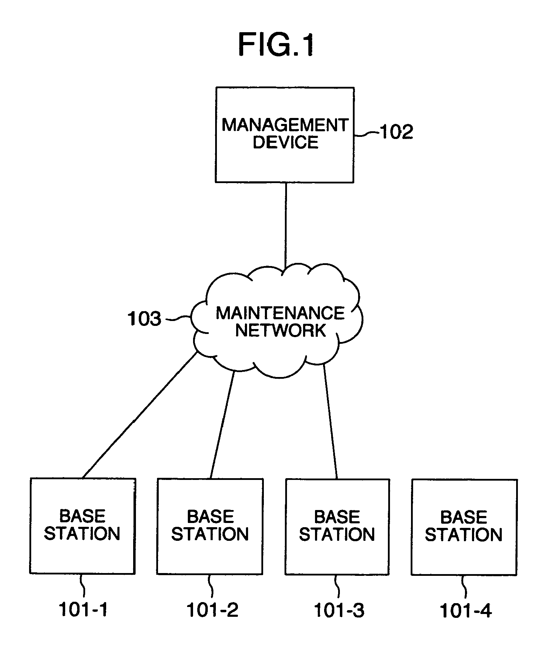

Fig. 1 shows a configuration of the wireless communication system applying the present invention. The wireless communication system has existing base stations 101-1, 101-2, 101-3 and a management device 102. The base stations 101-1, 101-2, 101-3 and the management device 102 are connected to a maintenance network 103. Now, let us consider a case in which a base station 101-4 is newly deployed. In that case, how the method of the present invention is applied will be explained as follows.

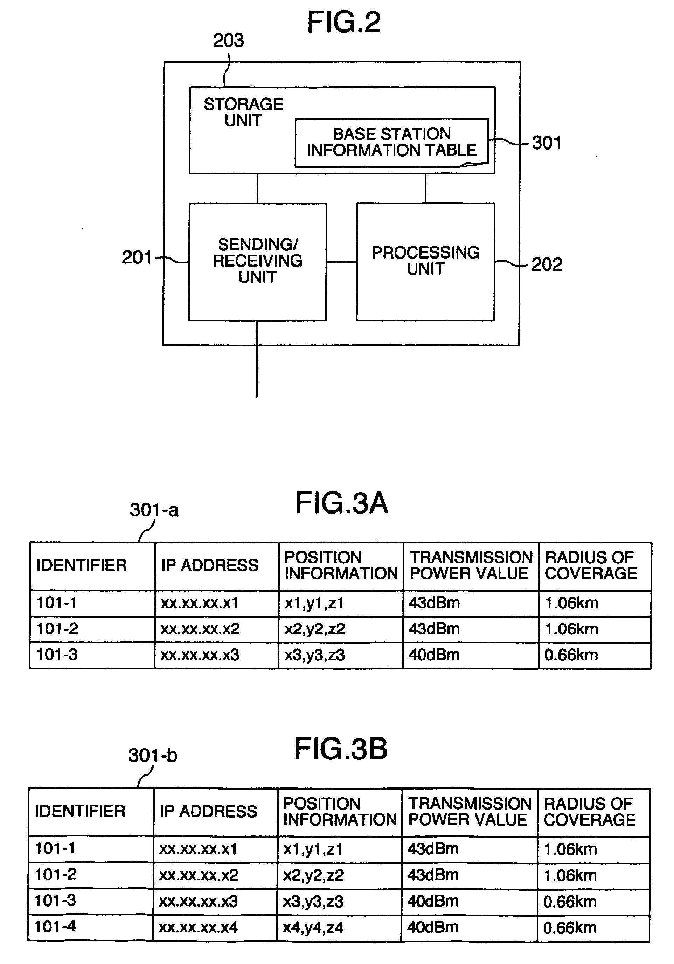

First, the configuration of the management device 102 is shown in Fig. 2. The management device 102 comprises a sending/receiving unit 201 connected to the maintenance network 103, a processing unit 202 and a storage unit 203. The storage unit 203 stores a base station information table 301. The base station information table 301 before the base station 101-4 is deployed is as shown at 301-a in Fig. 3A. More precisely, it stores an identifier, an IP address, position information, a transmission power value and a radius of coverage for each of the existing base stations 101-1, 101-2, 101-3. These pieces of information were stored by the method of this invention being executed as the base stations 101-1, 101-2, 101-3 were deployed.

In the processing unit 202, a unit to calculate the radius of coverage for each of the base stations 101 (base stations 101-1, 101-2, 101-3, 101-4) may be called a radius of coverage calculation unit and a unit to determine the adjoining base stations for each base station 101 an adjoining base station determination unit.

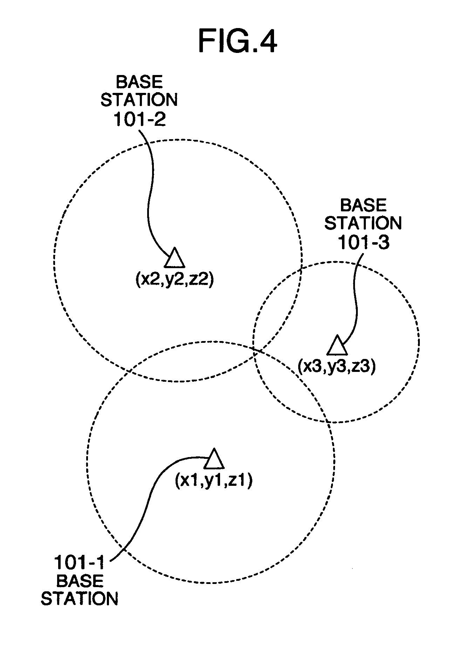

The positions on an actual map of the base stations 101-1, 101-2, 101-3 and their radii of coverage are supposed to be as shown in Fig. 4. Triangle marks represent the positions of the base stations and dotted circles represent a radius of coverage of each base station indicated by the triangle mark at the center of the dotted circle.

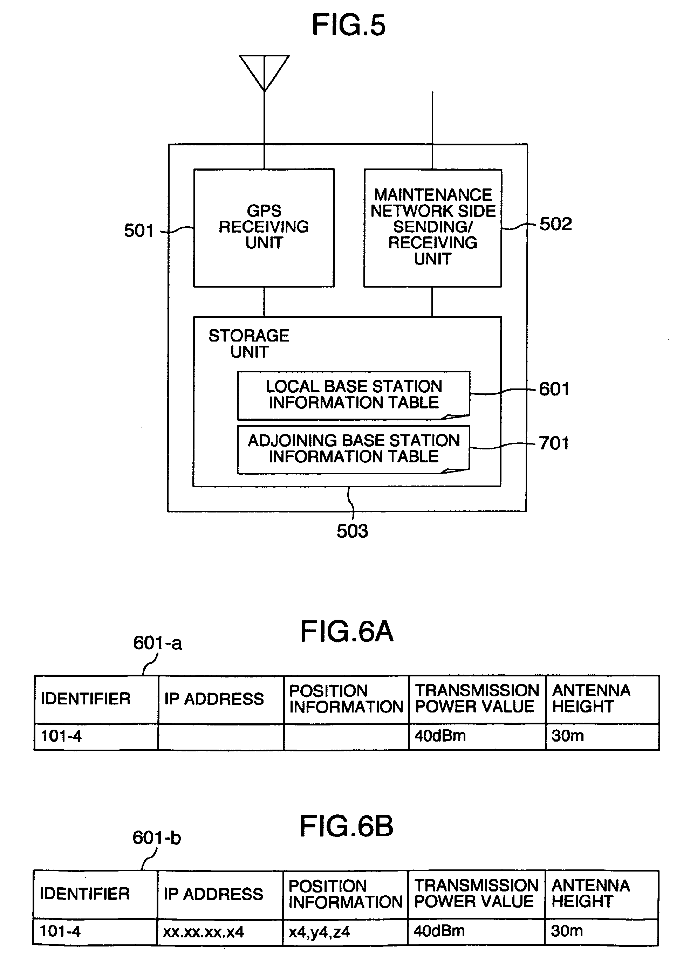

Fig. 5 shows a configuration of the base stations 101 (common to the base stations 101-1, 101-2, 101-3, 101-4). Each of the base stations 101 has a maintenance network side sending/receiving unit 502 and a storage unit 503. The storage unit 503 stores a local base station information table 601 and an adjoining base station information table 701.

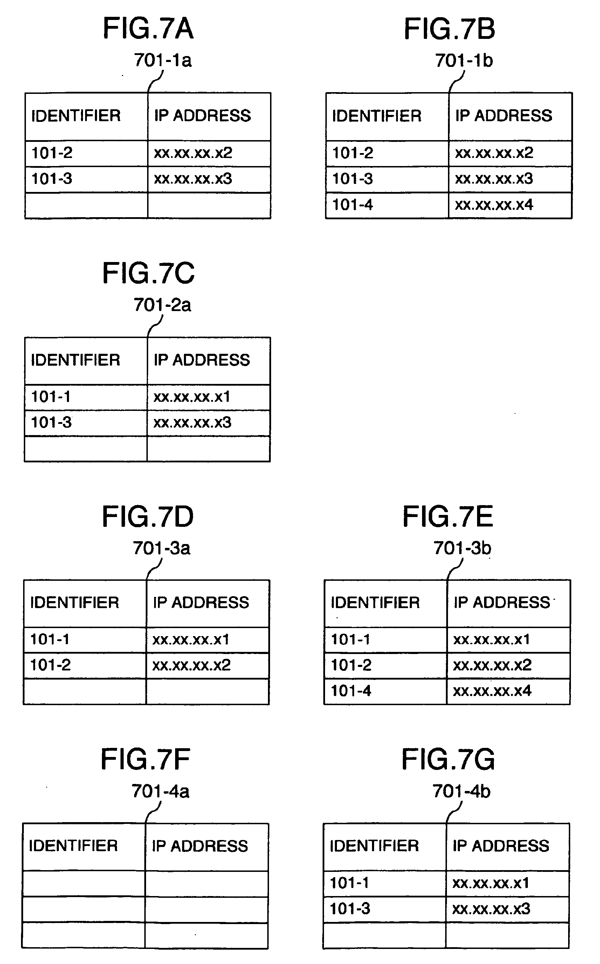

The adjoining base station information table of the base station 101-1 before the base station 101-4 was installed is as shown at 701-1a of Fig. 7A. That is, the base station 101-2 and the base station 101-3 are stored as the adjoining base stations.

The adjoining base station information table of the base station 101-2 before the base station 101-4 was installed is as shown at 701-2a of Fig. 7C. That is, the base station 101-1 and base station 101-3 are stored as the adjoining base stations.

The adjoining base station information table of the base station 101-3 before the base station 101-4 was installed is as shown at 701-3a of Fig. 7D. That is, the base station 101-1 and base station 101-2 are stored as the adjoining base stations.

Before the base station 101-4 is placed into operation, its local base station information table is as shown at 601-a of Fig. 6A. That is, the identifier of the local base station, the transmission power value and the height of antenna are set in advance. The adjoining base station information table of the base station 101-4 before it is put into operation has nothing stored therein as shown at 701-4a of Fig. 7F.

When the base station 101-4 is started, a GPS receiving unit 501 automatically acquires position information and stores it in the local base station information table. Upon being connected to the maintenance network 103, the base station 101-4 automatically takes in an IP address of the local base station from the management device and stores it in the local base station information table. The automatic acquisition of the IP address is made possible by the use of a widely used DHCP, so the method of IP address acquisition is not detailed here. At this point in time, the local base station information table of the base station 101-4 is as shown at 601-b of Fig. 6B.

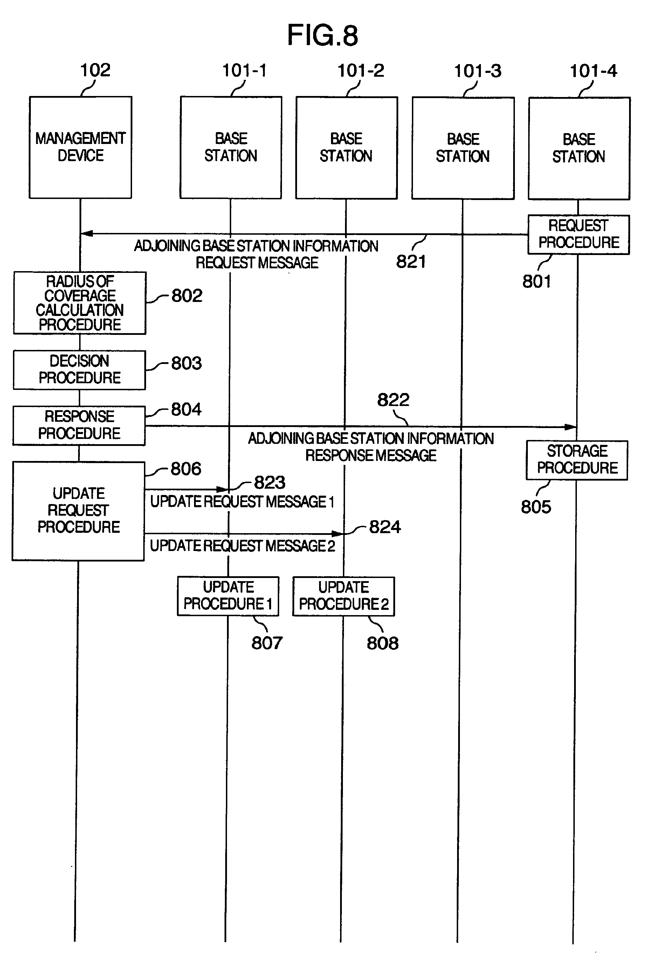

With the position information and the local base station's IP address taken in, the base station 101-4 initiates a sequence of Fig. 8 for automatically determining adjoining base stations and automatically setting adjoining base station information. This sequence will be explained as follows.

(Request Procedure 801)

First, the base station 101-4 sends from the maintenance network side sending/receiving unit 502 to the management device 102 an adjoining base station information request message (821) stored in the local base station information table that includes the local base station's identifier, IP address, position information, transmission power value and the height of antenna.

(Radius of Coverage Calculation Procedure 802)

When it receives the adjoining base station information request message (821) through its sending/receiving unit 201, the management device 102 causes the processing unit 202 to calculate the radius of coverage of the base station 101-4 based on the transmission power value of the base station 101-4. The calculation of the radius of coverage is done using the commonly known equation of radio transmission loss. For example, the Okumura-Hata model may be used to calculate it as follows.

Here, it is assumed that the base station 101-4 is newly deployed in an urban area. In the Okumura-Hata model for urban areas, a reference characteristic is approximated by equation 1.

(Equation 1)

$$Lb = 69.55 + 26.16 \times \log(f) - 13.82 \times \log(h1) - \{(1.1 \times \log(f) - 0.7) \times h2 - (1.56 \times \log(f) - 0.8)\} + (44.9 - 6.55 \times \log(h1)) \times \log(R)$$

Here,

Lb: transmission loss (dB)
f: frequency (MHz)
h1: height of base station antenna (m)
h2: height of mobile station antenna (m)
R: transmission distance (km)

Substituting values into Lb, f, h1 and h2 of equation 1 and resolving it for R produces the radius of coverage. Let the transmission power value of the base station 101-4 be 40 dBm, the base station antenna gain be 10 dBi, the mobile station antenna gain 0 dBi, the gain correction value 0 dBm and the mobile station allowable reception sensitivity -70 dBm. Since allowable transmission loss = transmission power value + base station antenna gain + mobile station antenna gain + gain correction value - mobile station allowable reception sensitivity = 40 + 10 + 0 + 0 - (-70) = 120 dB, we get Lb = 120 (dB). Here, the transmission power value uses the value contained in the adjoining base station information request message (821). It is also assumed that the base station antenna gain, the mobile station antenna gain, the gain correction value and the mobile station allowable reception sensitivity are stored as fixed values in the management device 102. The gain correction value is used when the reception technology uses a technique that can produce a gain as in a rake synthesizing circuit, mainly for the purpose of taking the gain into consideration. It is assumed that f = 800 (MHz). This is a frequency of radio used by the system and stored as a fixed value in the management device 102. It is also assumed that h1 = 30 (m). This is the value contained in the adjoining base station information request message (821). Another assumption is that h2 = 1 (m) which is stored as a fixed value in the management device 102. Substituting these values into equation 1 results in R ≈ 0.66 km. That is, the radius of coverage of the base station 101-4 is 0.66 km.

Because the Okumura-Hata model offers not just the equation for urban areas but also the ones for open areas, suburbs and large cities, the radius of coverage can also be calculated for other than the urban areas by storing model information, that indicates which model the environment of the local base station matches, in the local base station information table in advance, putting the model information in the adjoining base station information request message (821) during the request procedure 801 and using the model equation presented by the model information during the radius of coverage calculation procedure 802.

The management device 102, after calculating the radius of coverage, stores the identifier of the base station 101-4, the IP address, the position information, the transmission power value and the radius of coverage in the base station information table 301. What has been described above is the radius of coverage calculation procedure (802).

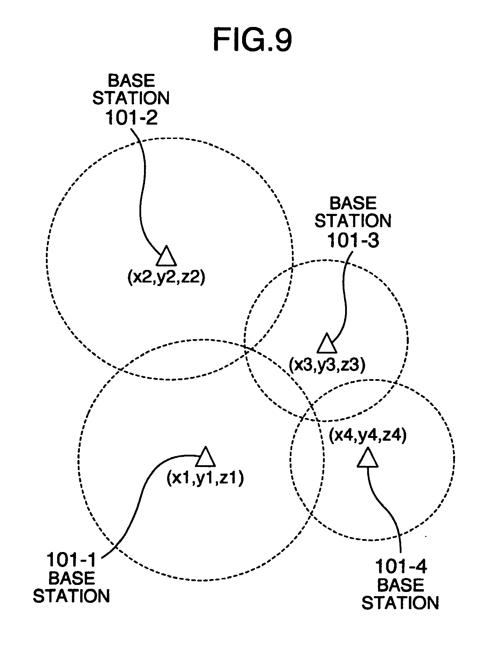

At this stage, the base station information table 301 of the management device 102 is as shown at 301-b of Fig. 3B. The base stations 101-1, 101-2, 101-3, 101-4 are assumed to have a relation on the actual map as shown in Fig. 9 in terms of their position and the radius of coverage.

(Decision Procedure 803)

The management device 102 has the processing unit 202 calculate the distance between the base station 101-4 and the base station 101-1 based on the position information of the base stations 101-4, 101-1 stored in the base station information table 301, calculate the sum of the radii of coverage of the base stations 101-4 and 101-1 and compare the calculated results. As a result of comparison, the distance is found to be smaller than the sum of the radii of coverage, as shown in Fig. 9, so that the base station 101-1 and the base station 101-4 are determined to be adjoining base stations to each other. A similar comparison is made between the distance from the base station 101-4 to the base station 101-2 and the sum of the radii of coverage of the two base stations. As shown in Fig. 9, since the distance between the two base stations is greater than the sum of their radii of coverage, the base station 101-2 and the base station 101-4 are not taken as adjoining base stations to each other. Likewise, the distance between the base station 101-4 and the base station 101-3 is compared with the sum of their radii of coverage. This comparison, as shown in Fig. 9, indicates that the distance is smaller than the sum of radii of coverage. So, it is decided that the base station 101-3 and the base station 101-4 adjoin each other.

(Response Procedure 804)

The management device 102 returns from its sending/receiving unit 201 to the base station 101-4 an adjoining base station information response message (822) including the identifiers and IP addresses of the base stations 101-1 and 101-3.

(Storage Procedure 805)

Upon receiving the adjoining base station information response message (822) through the maintenance network side sending/receiving unit 502, the base station 101-4 stores the identifiers and IP addresses of the base stations 101-1 and 101-3 in the local base station information table. At this stage, the local base station information table of the base station 101-4 is as shown at 701-4b of Fig. 7G.

(Update Request Procedure 806)

The management device 102 sends from its sending/receiving unit 201 to the base station 101-1 an update request message 1 (823) containing the identifier and IP address of the base station 101-4. It also sends an update request message 2 (824) containing the identifier and IP address of the base station 101-4 to the base station 101-3.

(Update Procedure 1 807)

Upon reception of the update request message 1 (823), the base station 101-1 stores the identifier and IP address of the base station 101-4 in the adjoining base station information table.
At this stage, the adjoining base station information table of the base station 101-1 is as shown at 701-1b of Fig. 7B.

(Update Procedure 2 808)

Upon receiving the update request message 2 (824), the base station 101-3 stores the identifier and IP address of the base station 101-4 in the adjoining base station information table. At this stage, the adjoining base station information table of the base station 101-3 is as shown at 701-3b of Fig. 7E.
In the above example, it has been shown that, when the base station 101-4 is deployed, automatic operations are executed: automatically determining adjoining base stations for the base station 101-4, automatically setting the adjoining base station information, automatically updating adjoining base station information in the base station 101-1, that has been determined to adjoin the base station 101-4, and automatically updating adjoining base station information in the base station 101-3, that has similarly been determined to adjoin the base station 101-4.

[Embodiment 2]

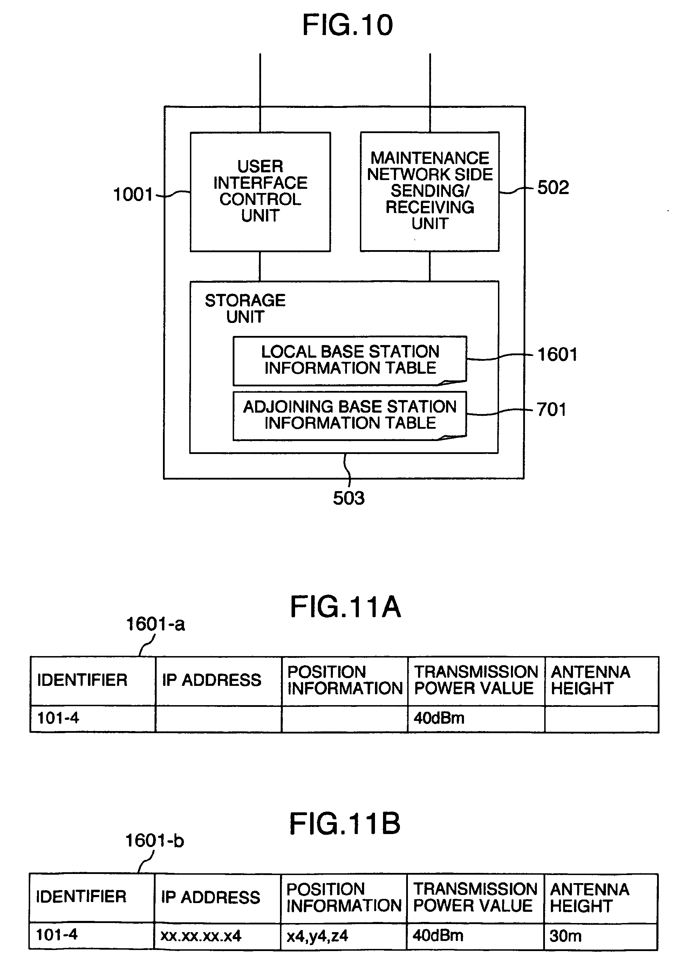

As shown in Fig. 10, the base station 101-4 in embodiment 2 does not mount a GPS receiver, which is mounted in the base station of embodiment 1, but instead mounts a user interface and a user interface control unit 1001. In this embodiment, the adjoining base station information is automatically set by acquiring position information from information entered through the user interface.

The local base station information table 1601 in the base station 101-4 before the base station is put into operation is as shown at 1601-a of Fig. 11A. That is, the identifier and the transmission power value are stored beforehand.

After being put into operation, the base station 101-4 causes the user interface control unit to prompt the user, through the user interface, to enter the antenna height of the base station and also the position information of the base station or an address where the base station is deployed.

The user enters the antenna height of the base station and also enters the position information if it is available and, if not, the address instead. In the following, processing will be explained for cases where the position information is entered and where the address is entered.

(When Position Information Is Entered)

The base station 101-4 stores the antenna height and the position information entered by the user in the local base station information table 1601.

Then, when connected to the maintenance network 103, the base station 101-4 automatically acquires the IP address of the local base station and stores it in the local base station information table 1601. At this point in time, the local base station information table 1601 is as shown at 1601-b of Fig. 11B. Subsequently, the request procedure (801) inclusive and the following procedures of embodiment 1 are executed in the similar way to automatically set the adjoining base station information, producing the same result as embodiment 1.

(When Address Is Entered)

When the address is entered, the base station 101-4 first stores the entered antenna height in the local base station information table 1601. Then, it executes an application, that determines position information from an address, to determine the position information corresponding to the address entered and stores it in the local base station information table 1601. Then, when connected to the maintenance network 103, the base station 101-4 automatically acquires the IP address of the local base station from the management device 102 and stores it in the local base station information table 1601. At this point in time, the local base station information table 1601 is as shown at 1601-b of Fig. 11B. Subsequently, the request procedure (801) inclusive and the following procedures of embodiment 1 are executed in the similar way to automatically set the adjoining base station information, producing the same result as embodiment 1.

[Embodiment 3]

Embodiment 3 is another example in which an address is entered in embodiment 2. In this example, the application for determining the position information from the address is mounted not in the base station 101 but in the management device 102.

The base station 101-4, when it is connected to the maintenance network 103, automatically acquires the IP address of the local base station from the management device 102 and stores it in the local base station information table 1601, after which it sends a position information request message containing the entered address to the management device 102. Upon receiving the position information request message through the sending/receiving unit 201, the management device 102 executes the application, that determines position information from an address, to determine the position information corresponding to the address contained in the position information request message, and returns a position information response message containing that position information to the base station 101-4. When it receives the position information response message through the maintenance network side sending/receiving unit 502, the base station 101-4 stores the position information contained in the position information response message in the local base station information table 1601. At this point in time, the local base station information table 1601 is as shown at 1601-b of Fig. 11B. Subsequently, the request procedure (801) inclusive and the following procedures of embodiment 1 are executed in the similar way to automatically set the adjoining base station information, producing the same result as embodiment 1.

[Embodiment 4]

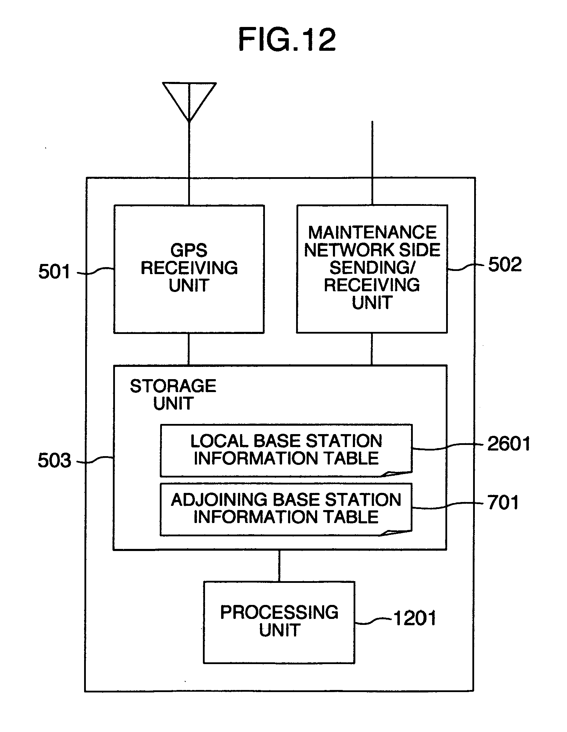

In embodiment 1, the function to calculate the radius of coverage from the radio transmission power is installed in the processing unit 202 of the management device 102. In contrast, embodiment 4 represents an example configuration in which the function to calculate the radius of coverage based on the radio transmission power is not mounted in the processing unit 202 of the management device 102 but instead installed in a processing unit 1201 of the base station 101, as shown in Fig. 12.

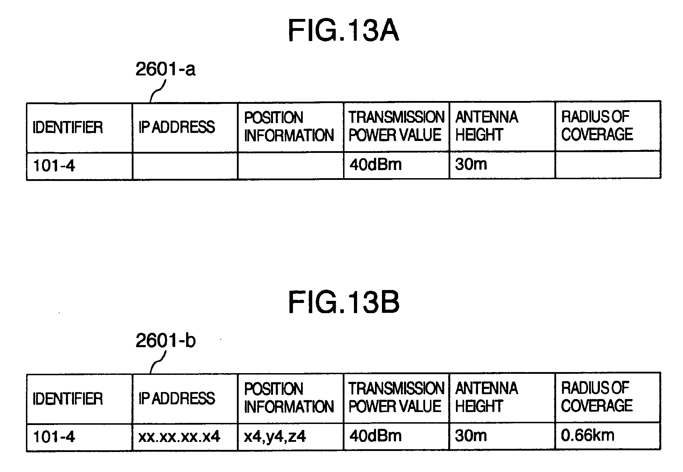

The local base station information table 2601 in the base station 101-4 before the base station is placed into operation is as shown in at 2601-a of Fig. 13A. That is, the identifier, the transmission power value and the antenna height are stored in advance.

The base station 101-4, when placed into operation, automatically acquires the position information through the GPS receiving unit 501 and stores it in the local base station information table 2601. When connected to the maintenance network 103, the base station 101-4 automatically acquires the IP address of the local base station from the management device 102 and stores it in the local base station information table 2601. The automatic acquisition of the IP address is made possible by the use of the commonly used DHCP, so the acquisition method is not detailed here. Further, the base station 101-4 has the processing unit 1201 calculate the radius of coverage from the transmission power value stored in the local base station information table 2601 and stores it in the local base station information table 2601. The calculation of the radius of coverage is done by using the Okumura-Hata model for instance, in a way similar to the radius of coverage calculation procedure 802 of embodiment 1. At this point in time, the local base station information table of the base station 101-4 is as shown at 2601-b of Fig. 13B.

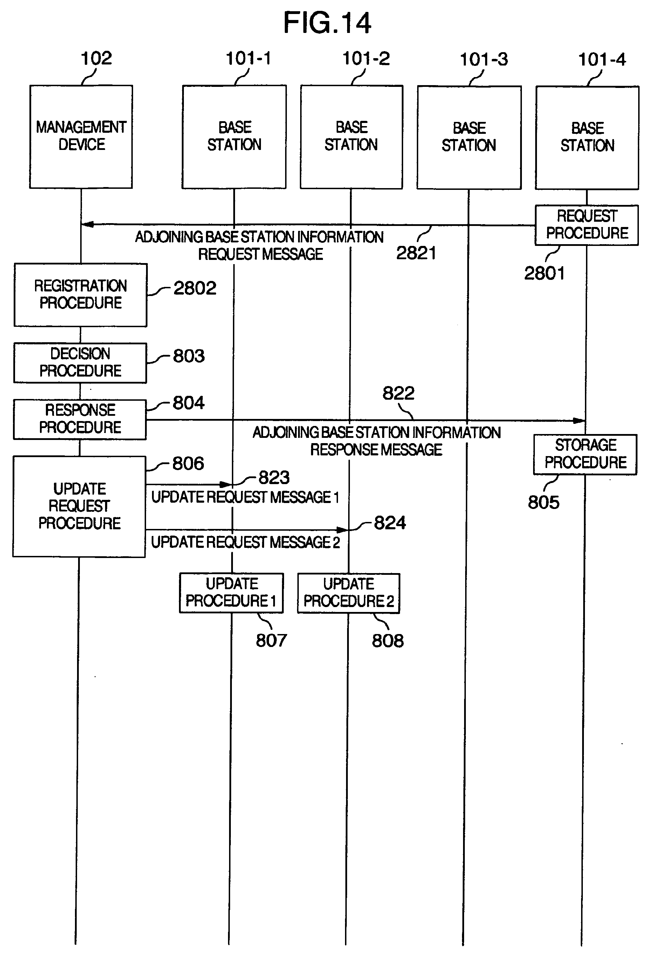

After acquiring the position information and the IP address of the local base station and calculating the radius of coverage, the base station 101-4 initiates a sequence, shown in Fig. 14, for automatically determining adjoining base stations and automatically setting the adjoining base station information. In the following, this sequence will be described by focusing on the difference between this sequence and the sequence of Fig. 8 of embodiment 1.

(Request Procedure 2801)

The base station 101-4 sends from the maintenance network side sending/receiving unit 502 to the management device 102 an adjoining base station information request message (2821) containing the local base station's identifier, IP address, position information, transmission power value, antenna height and the radius of coverage, all stored in the local base station information table 2601.

(Registration Procedure 2802)

Upon reception of the adjoining base station information request message (2821) through the sending/receiving unit 201, the management device 102 stores the identifier of the base station 101-4, IP address, position information, transmission power value and the radius of coverage in the base station information table 301.

At this stage, the base station information table 301 of the management device 102 is as shown at 301-b of Fig. 3B. The base stations 101-1, 101-2, 101-3, 101-4 is assumed to have a relation on the actual map as shown in Fig. 9 in terms of their position and the radius of coverage. Subsequently, the decision procedure (803) inclusive and the following procedures of embodiment 1 are executed in the similar manner to automatically set the adjoining base station information, producing the same result as embodiment 1.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A management device (102) connected to base stations (101-1-4) via a network (103), comprising:

   a receiving unit (201) to receive from the base stations identifiers, position information and radio transmission power values of the local base stations;
   a radius of coverage calculation unit (202) to calculate a radius of coverage of each base station based on the radio transmission power value received through the receiving unit;
   an adjoining base station deciding unit (202) to, upon receiving a request for information on adjoining base stations from a first base station, check the radius of coverage calculated by the radius of coverage calculation unit and the position information received by the receiving unit to see if a distance between the first base station and a second base station is smaller than a sum of the radii of coverage of the two base stations and, if so, decide that the two base stations are adjoining base stations to each other; and
   a sending unit (201) to send to the first base station information on the adjoining base stations of the first base station determined by the adjoining base station deciding unit.

2. A management device according to claim 1, wherein the sending unit sends to the base stations determined as the adjoining base stations of the first base station information that they are the adjoining base stations of the first base station.

3. An adjoining base station deciding method for determining adjoining base stations of each base station, comprising the steps of:

receiving from the base stations identifiers, position information and radio transmission power values of the local base stations;
calculating a radius of coverage of each base station based on the radio transmission power value received (802);
checking, upon receiving a request for information on adjoining base stations from a first base station, the calculated radius of coverage and the received position information to see if a distance between the first base station and a second base station is smaller than a sum of the radii of coverage of the two base stations and, if so, decide that the two base stations are adjoining base stations to each other (803); and
sending to the first base station information on the adjoining base stations of the first base station determined by the adjoining base station deciding unit (804).

4. An adjoining base station deciding method according to claim 3, further comprising a step of:

sending to the base stations determined as the adjoining base stations of the first base station information that they are the adjoining base stations of the first base station (806).

# FIG.1

MANAGEMENT DEVICE 102

103 MAINTENANCE NETWORK

BASE STATION 101-1

BASE STATION 101-2

BASE STATION 101-3

BASE STATION 101-4

# FIG.2

# FIG.3A

301-a

| IDENTIFIER | IP ADDRESS | POSITION INFORMATION | TRANSMISSION POWER VALUE | RADIUS OF COVERAGE |
|---|---|---|---|---|
| 101-1 | xx.xx.xx.x1 | x1,y1,z1 | 43dBm | 1.06km |
| 101-2 | xx.xx.xx.x2 | x2,y2,z2 | 43dBm | 1.06km |
| 101-3 | xx.xx.xx.x3 | x3,y3,z3 | 40dBm | 0.66km |

# FIG.3B

301-b

| IDENTIFIER | IP ADDRESS | POSITION INFORMATION | TRANSMISSION POWER VALUE | RADIUS OF COVERAGE |
|---|---|---|---|---|
| 101-1 | xx.xx.xx.x1 | x1,y1,z1 | 43dBm | 1.06km |
| 101-2 | xx.xx.xx.x2 | x2,y2,z2 | 43dBm | 1.06km |
| 101-3 | xx.xx.xx.x3 | x3,y3,z3 | 40dBm | 0.66km |
| 101-4 | xx.xx.xx.x4 | x4,y4,z4 | 40dBm | 0.66km |

# FIG.4

BASE
STATION
101-2

BASE
STATION
101-3

$(x2,y2,z2)$

$(x3,y3,z3)$

$(x1,y1,z1)$

101-1
BASE
STATION

# FIG.5

# FIG.6A

601-a

| IDENTIFIER | IP ADDRESS | POSITION INFORMATION | TRANSMISSION POWER VALUE | ANTENNA HEIGHT |
|---|---|---|---|---|
| 101-4 | | | 40dBm | 30m |

# FIG.6B

601-b

| IDENTIFIER | IP ADDRESS | POSITION INFORMATION | TRANSMISSION POWER VALUE | ANTENNA HEIGHT |
|---|---|---|---|---|
| 101-4 | xx.xx.xx.x4 | x4,y4,z4 | 40dBm | 30m |

# FIG.7A

701-1a

| IDENTIFIER | IP ADDRESS |
|------------|------------|
| 101-2 | xx.xx.xx.x2 |
| 101-3 | xx.xx.xx.x3 |
| | |

# FIG.7B

701-1b

| IDENTIFIER | IP ADDRESS |
|------------|------------|
| 101-2 | xx.xx.xx.x2 |
| 101-3 | xx.xx.xx.x3 |
| 101-4 | xx.xx.xx.x4 |

# FIG.7C

701-2a

| IDENTIFIER | IP ADDRESS |
|------------|------------|
| 101-1 | xx.xx.xx.x1 |
| 101-3 | xx.xx.xx.x3 |
| | |

# FIG.7D

701-3a

| IDENTIFIER | IP ADDRESS |
|------------|------------|
| 101-1 | xx.xx.xx.x1 |
| 101-2 | xx.xx.xx.x2 |
| | |

# FIG.7E

701-3b

| IDENTIFIER | IP ADDRESS |
|------------|------------|
| 101-1 | xx.xx.xx.x1 |
| 101-2 | xx.xx.xx.x2 |
| 101-4 | xx.xx.xx.x4 |

# FIG.7F

701-4a

| IDENTIFIER | IP ADDRESS |
|------------|------------|
| | |
| | |
| | |

# FIG.7G

701-4b

| IDENTIFIER | IP ADDRESS |
|------------|------------|
| 101-1 | xx.xx.xx.x1 |
| 101-3 | xx.xx.xx.x3 |
| | |

# FIG.8

# FIG.9

BASE
STATION
101-2

(x2,y2,z2)

BASE
STATION
101-3

(x3,y3,z3)

(x4,y4,z4)

(x1,y1,z1)

101-1
BASE
STATION

101-4
BASE
STATION

# FIG.10

# FIG.11A

1601-a

| IDENTIFIER | IP ADDRESS | POSITION INFORMATION | TRANSMISSION POWER VALUE | ANTENNA HEIGHT |
|---|---|---|---|---|
| 101-4 | | | 40dBm | |

# FIG.11B

1601-b

| IDENTIFIER | IP ADDRESS | POSITION INFORMATION | TRANSMISSION POWER VALUE | ANTENNA HEIGHT |
|---|---|---|---|---|
| 101-4 | xx.xx.xx.x4 | x4,y4,z4 | 40dBm | 30m |

# FIG.12

# FIG.13A

2601-a

| IDENTIFIER | IP ADDRESS | POSITION INFORMATION | TRANSMISSION POWER VALUE | ANTENNA HEIGHT | RADIUS OF COVERAGE |
|---|---|---|---|---|---|
| 101-4 | | | 40dBm | 30m | |

# FIG.13B

2601-b

| IDENTIFIER | IP ADDRESS | POSITION INFORMATION | TRANSMISSION POWER VALUE | ANTENNA HEIGHT | RADIUS OF COVERAGE |
|---|---|---|---|---|---|
| 101-4 | xx.xx.xx.x4 | x4,y4,z4 | 40dBm | 30m | 0.66km |

EP 2 227 050 A2

# FIG.14

20

## REFERENCES CITED IN THE DESCRIPTION

**Patent documents cited in the description**

- JP 2006217051 A

- JP 8237728 A